# EUROPEAN PATENT APPLICATION

(11) **EP 4 386 567 A1**
(43) Date of publication of application: **19.06.2024**
(21) Application number: 22871553.8
(22) Date of filing: 06.07.2022
(51) Int. Cl.: G06F 12/08

(54) **DATA PRE-FETCHING METHOD, AND COMPUTING NODE AND STORAGE SYSTEM**

(30) Priority: 23.09.2021 CN 202111117681
(71) Applicant: Huawei Technologies Co., Ltd., Shenzhen, Guangdong 518129 (CN)
(72) Inventor: DONG, Ruliang, Shenzhen, Guangdong 518129 (CN); DU, Ge, Shenzhen, Guangdong 518129 (CN); LIU, Huawei, Shenzhen, Guangdong 518129 (CN); ZHANG, Jinyi, Shenzhen, Guangdong 518129 (CN)
(74) Representative: Pfenning, Meinig & Partner mbB
(86) International application number: PCT/CN2022/104124
(87) International publication number: WO 2023/045492

(57) **Abstract**

Embodiments of this application provide a data prefetching method, a computing node, and a storage system. The method includes: A computing node obtains information about accessing a storage node by a first application in a preset time period. The computing node determines information about prefetch data based on the access information. The computing node determines, based on the information about the prefetch data, a cache node prefetching the prefetch data, and generates a prefetch request for prefetching the prefetch data. The computing node sends the prefetch request to the cache node. The cache node performs a prefetching operation on the prefetch data in response to the prefetch request. The solutions provided in embodiments of this application improve prefetching accuracy.

## Description

This application claims priority to Chinese Patent Application No. 202111117681.6, filed with the China National Intellectual Property Administration on September 23, 2021 and entitled "DATA PREFETCHING METHOD, COMPUTING NODE, AND STORAGE SYSTEM", which is incorporated herein by reference in its entirety.

### TECHNICAL FIELD

This application relates to the field of computer technologies, and specifically, to a data prefetching method, a computing node, and a computer system.

### BACKGROUND

A storage system usually includes a plurality of computing nodes and a plurality of storage nodes that are connected to each other. The computing nodes write generated data into the storage nodes, and read data from the storage nodes. To shorten a data access path from a computing node to a storage node, a memory of the storage system is usually used to store data written or read by the computing node, or pre-load data from a main memory of the storage node into a memory of the storage system. With rapid growth of data volumes, a global cache technology for storage systems emerges. By using the global cache technology, cache resources (for example, memories) in the storage system may be uniformly named, to form a cache pool. Each computing node may cache data into any address in the cache pool. The cache pool includes, for example, cache resources in a plurality of storage nodes, or may include cache resources in a plurality of cache nodes included in the storage system. The cache node is used as an example. Data prefetch recommendation is usually performed on each cache node side. Prefetching accuracy of the solutions is low. Alternatively, a central node is provided in the cache node to perform data prefetch recommendation. The solutions cause long prefetch latency and increases network communication costs.

### SUMMARY

Embodiments of this application are intended to provide a data prefetching method, a computing node, and a storage system. Prefetch data recommendation is performed on a computing node side, thereby improving prefetching accuracy, and reducing network communication costs.

To achieve the foregoing objectives, a first aspect of this application provides a data prefetching method. The method includes: A computing node obtains information about accessing a storage node by a first application in a preset time period. The computing node determines information about prefetch data based on the access information. The computing node determines, based on the information about the prefetch data, a cache node prefetching the prefetch data, and generates a prefetch request for prefetching the prefetch data. The computing node sends the prefetch request to the cache node. The cache node performs a prefetching operation on the prefetch data in response to the prefetch request.

The computing node determines the information about the prefetch data based on the local access information, thereby improving prefetching accuracy, and reducing network communication costs.

In a possible implementation of the first aspect, that the computing node determines information about prefetch data based on the access information includes: The computing node determines the information about the prefetch data based on the access information by using a prefetch recommendation model.

The information about the prefetch data is determined by using the prefetch recommendation model, thereby improving accuracy and efficiency of the prefetch data recommendation.

In a possible implementation of the first aspect, the prefetch recommendation model is based on at least one of the following algorithms: a clustering algorithm, a time series prediction algorithm, a frequent pattern mining algorithm, and a hotspot data identification algorithm.

In a possible implementation of the first aspect, the access information includes access information of a first user, and that the computing node determines the information about the prefetch data based on the access information by using a prefetch recommendation model includes: The prefetch recommendation model determines an access mode of the first user based on the access information of the first user, and determines to-be-prefetched data based on the access mode.

In a possible implementation of the first aspect, the prefetch request is a prefetch request for a data block, file data, or object data, and the method further includes: After receiving the prefetch request for the prefetch data from the computing node, the cache node converts the prefetch request into a format and semantics that are uniformly set for the data block, the file data, and the object data.

The prefetch request is converted into a unified format and unified semantics, so that the cache node only needs to provide one type of prefetching interface, thereby avoiding costs and operation complexity of maintaining a plurality of protocols. In addition, global cache pools corresponding to different applications and different data types may be provided, thereby improving cache resource utilization.

In a possible implementation of the first aspect, the information about the prefetch data includes a first identifier of the prefetch data, and the converting the prefetch request into a format and semantics that are uniformly set for the data block, the file data, and the object data includes: converting the first identifier in the prefetch request into a second identifier that conforms to a preset format.

In a possible implementation of the first aspect, the converting the first identifier in the prefetch request into a second identifier that conforms a preset format includes: converting the first identifier into the second identifier by using a hash algorithm.

In a possible implementation of the first aspect, the cache node includes a write cache and a read cache, and that the cache node performs a prefetching operation on the prefetch data in response to the prefetch request includes: The cache node determines, based on the second identifier, whether the write cache stores the prefetch data, and if it is determined that the write cache stores the prefetch data, stores the prefetch data and the second identifier in the read cache correspondingly.

In a possible implementation of the first aspect, that the cache node performs a prefetching operation on the prefetch data in response to the prefetch request further includes: If it is determined that the write cache does not store the prefetch data, the cache node determines, based on the second identifier, whether the read cache stores the prefetch data; and if it is determined that the read cache does not store the prefetch data, generates a data read request based on the second identifier, and sends the data read request to the storage node. The storage node reads the prefetch data based on the data read request, and returns the prefetch data to the cache node. The cache node stores the prefetch data and the second identifier in the read cache correspondingly.

A second aspect of this application provides a storage system, including a computing node, a cache node, and a storage node. The computing node is configured to: obtain information about accessing a storage node by a first application in a preset time period; determine information about prefetch data based on the access information; determine, based on the information about the prefetch data, a cache node prefetching the prefetch data, and generate a prefetch request for prefetching the prefetch data; and send the prefetch request to the cache node. The cache node is configured to perform a prefetching operation on the prefetch request in response to the prefetch request.

In a possible implementation of the second aspect, that the computing node is configured to determine information about the prefetch data based on the access information specifically includes: The computing node is configured to determine the information about the prefetch data based on the access information by using a prefetch recommendation model.

In a possible implementation of the second aspect, the prefetch recommendation model is based on at least one of the following algorithms: a clustering algorithm, a time series prediction algorithm, a frequent pattern mining algorithm, and a hotspot data identification algorithm.

In a possible implementation of the second aspect, the access information includes access information of a first user, and that the computing node is configured to determine the information about the prefetch data based on the access information by using a prefetch recommendation model includes: The computing node is configured to determine an access mode of the first user based on the access information of the first user, and determine to-be-prefetched data based on the access mode by using the prefetch recommendation model.

In a possible implementation of the second aspect, the prefetch request is a prefetch request for a data block, file data, or object data, and the cache node is further configured to: after receiving the prefetch request for the prefetch data from the computing node, convert the prefetch request into a format and semantics that are uniformly set for the data block, the file data, and the object data.

In a possible implementation of the second aspect, the information about the prefetch data includes a first identifier of the prefetch data, and that the cache node is configured to convert the prefetch request into a format and semantics that are uniformly set for the data block, the file data, and the object data includes: The cache node is configured to convert the first identifier in the prefetch request into a second identifier that conforms to a preset format.

In a possible implementation of the second aspect, that the cache node is configured to convert the first identifier in the prefetch request into a second identifier that conforms a preset format includes: The cache node is configured to convert the first identifier into the second identifier by using a hash algorithm.

In a possible implementation of the second aspect, the cache node includes a write cache and a read cache, and that the cache node is configured to perform a prefetching operation on the prefetch data in response to the prefetch request includes: The cache node is configured to determine, based on the second identifier, whether the write cache stores the prefetch data, and if it is determined that the write cache stores the prefetch data, store the prefetch data and the second identifier in the read cache correspondingly.

In a possible implementation of the second aspect, that the cache node is configured to perform a prefetching operation on the prefetch data in response to the prefetch request further includes: The cache node is configured to: if it is determined that the write cache does not store the prefetch data, determine, based on the second identifier, whether the read cache stores the prefetch data; and if it is determined that the read cache does not store the prefetch data, generate a data read request based on the second identifier, and send the data read request to the storage node. The storage node is further configured to read the prefetch data based on the data read request, and return the prefetch data to the cache node. The cache node is further configured to store the prefetch data and the second identifier in the read cache correspondingly.

A third aspect of this application provides a data prefetching method. The method is performed by a computing node, and includes: obtaining information about accessing a storage node by a first application in a preset time period; determining information about prefetch data based on the access information; determining, based on the information about the prefetch data, a cache node prefetching the prefetch data, and generating a prefetch request for prefetching the prefetch data; and sending the prefetch request to the cache node.

In a possible implementation of the third aspect, the determining information about prefetch data based on the access information includes: determining the information about the prefetch data based on the access information by using a prefetch recommendation model.

In a possible implementation of the third aspect, the prefetch recommendation model is based on at least one of the following algorithms: a clustering algorithm, a time series prediction algorithm, a frequent pattern mining algorithm, and a hotspot data identification algorithm.

In a possible implementation of the third aspect, the access information includes access information of a first user, and the determining the information about the prefetch data based on the access information by using a prefetch recommendation model includes: The prefetch recommendation model determines an access mode of the first user based on the access information of the first user, and determines to-be-prefetched data based on the access mode.

A fourth aspect of this application provides a computing node, including a processor and a memory. The memory stores executable computer program instructions, and the processor executes the executable computer program instructions to implement the method according to the third aspect and the possible implementations of the third aspect.

A fifth aspect of this application provides a computer-readable storage medium. The computer-readable storage medium stores computer program instructions, and when the computer program instructions are executed by a computer or a processor, the computer or the processor is enabled to implement the method according to the third aspect and the possible implementations of the third aspect.

A sixth aspect of this application provides a computer program product, including computer program instructions. When the computer program instructions are run on a computer or a processor, the computer or the processor is enabled to implement the method according to the third aspect and the possible implementations of the third aspect.

### BRIEF DESCRIPTION OF DRAWINGS

Embodiments of this application are described with reference to accompanying drawings, so that embodiments of this application are clearer.
FIG. 1 is a diagram of an architecture of a computer system according to an embodiment of this application;
FIG. 2 is a schematic diagram of structures of a computing node and a cache node according to an embodiment of this application;
FIG. 3 is a schematic diagram of a method for performing data routing by a client adaptation layer;
FIG. 4 is a flowchart of a method for writing data into a storage system according to an embodiment of this application;
FIG. 5 is a flowchart of a method for reading data in a storage system according to an embodiment of this application;
FIG. 6 is a flowchart of a method for prefetching data in a storage system according to an embodiment of this application;
FIG. 7 is a schematic diagram of an access mode of a user according to an embodiment of this application; and
FIG. 8 is a diagram of a structure of a computing node according to an embodiment of this application.

### DESCRIPTION OF EMBODIMENTS

The following describes technical solutions of embodiments in this application with reference to accompanying drawings.

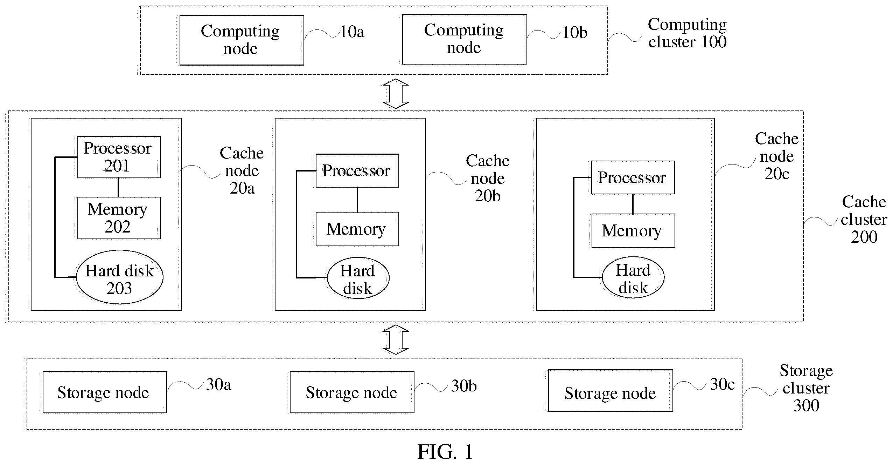

FIG. 1 is a diagram of an architecture of a computer system according to an embodiment of this application. The computer system is, for example, a storage system, and includes a computing cluster 100, a cache cluster 200, and a storage cluster 300. The computing cluster 100 includes a plurality of computing nodes. A computing node 10a and a computing node 10b are schematically shown in FIG. 1. A computing node may access data from a storage node through an application program or an application (Application, APP). Therefore, the computing node is also referred to as an "application server". The computing node may be a physical machine, or may be a virtual machine. The physical machine includes but is not limited to a desktop computer, a server, a laptop computer, and a mobile device.

The cache cluster 200 may be an independent physical cluster, or may share a same cluster (that is, be deployed in a same cluster) with the storage cluster 300. When the cache cluster 200 and the storage cluster 300 belong to a same cluster, resources (such as a storage resource and a computing resource) in the cluster are pre-divided into a resource used for performing a cache operation and a resource used for performing a storage operation. The cache cluster 200 includes a plurality of cache nodes. A cache node 20a, a cache node 20b, and a cache node 20c are schematically shown in the figure. The cache nodes are connected to each other by a network. The storage cluster 300 includes a plurality of storage nodes. A storage node 30a, a storage node 30b, and a storage node 30c are schematically shown in the figure. The cache nodes and the storage nodes may be physical machines, or may be virtual machines.

The cache node 20a is used as an example. The cache node 20a includes a processor 201, a memory 202, and a hard disk 203. The processor 201 is a central processing unit (central processing unit, CPU), configured to process an operation request from a computing node or an operation request from another cache node, and is also configured to process a request generated inside the cache node.

The memory 202 refers to an internal memory that directly exchanges data with the processor 201. The memory 202 can read and write data at any time, and has a high speed. The memory 202 is used as a temporary data memory of an operating system or another running program. The memory 202 includes at least two types of memories. For example, the memory may be a random access memory (Random Access Memory, RAM), or may be a read-only memory (Read-Only Memory, ROM). For example, the RAM may include a memory such as a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memory, RAM). The SCM is a composite storage technology that combines features of both a conventional storage apparatus and a memory. As a non-volatile memory, the SCM can provide a faster read/write speed than that of a hard disk, but is lower in terms of a computing speed than the DRAM and is cheaper than the DRAM in terms of costs. However, the DRAM and the SCM are merely examples for description in this embodiment. The memory may further include another random access memory, for example, a static random access memory (Static Random Access Memory, SRAM). In addition, the volatile memory in the memory 202 may be configured to have a power protection function, so that data stored in the memory 202 is not lost when a system is powered off. A memory with a power protection function is referred to as a non-volatile memory.

The hard disk 203 is configured to provide a non-volatile storage resource, with access latency that is usually higher than that of the memory and costs that are lower than those of the memory. The hard disk 203 may be, for example, a solid-state drive (Solid-State Drive, SSD), a hard disk drive (Hard Disk Drive, HDD).

To adapt to current massive computing and storage requirements, storage resources (for example, memories or hard disks) of the plurality of cache nodes in the cache cluster 200 may be aggregated, to provide a global cache pool, so that an application in each computing node can use a cache resource in any cache node. Usually, a storage medium (for example, a RAM, an SCM, or an SSD) with access latency that is lower than that of a hard disk in a storage node is selected as a storage resource in a cache node, to provide a faster data access speed than that of the storage node. In this way, when a cache requirement of the computing cluster 100 increases, more cache nodes may be added to the cache cluster 200, to horizontally expand a capacity of the global cache pool. The global cache pool provides unified address space (or namespace) for each computing node, and the computing node may route data to a cache node for caching the data, to avoid data redundancy and consistency problems caused by repeated caching of the data. In addition, technologies such as multi-copy, replication, and multi-active can be used to implement high availability of data in the global cache pool.

The computing node (for example, the computing node 10a) may send a data access request (a read request or a write request) for the storage cluster to a cache node (for example, the cache node 20a) for caching the data. The cache node 20a includes, for example, a write cache and a read cache. If the data access request is a write request, after writing the data to the write cache, the cache node 20a may return, to the computing node 10a, information indicating that the write succeeds, and then write the data from the write cache to the storage node in the background, thereby increasing a feedback speed to the write request. If the data access request is a read request, the cache node 20a may first determine whether the data is hit in the write cache. If it is determined that the data does not exist in the write cache, the cache node 20a may determine whether the read cache stores the data. If the read cache stores the data, the cache node 20a may directly read the data from the read cache, and return the data to the computing node 10a, without reading the data from the storage cluster. This shortens a data read path, and increases the feedback speed to the read request.

In another structure, an independent cache node may not be deployed, but storage resources such as a memory and a PCM in a storage node are used to form a cache pool, to be provided for an application in a computing node for use.

Usually, to improve data access efficiency, to-be-accessed data is prefetched to the cache pool in advance. In this way, a hit ratio of data in a cache is improved, thereby improving the data access efficiency. Data prefetching usually includes two processes: one is to recommend prefetch data, and the other is to read the recommended prefetch data from the storage node to the cache pool in advance.

In a related technology, data prefetching is usually performed on a cache cluster side, and there are usually two implementations for recommendation of prefetch data. In an implementation, recommendation of prefetch data is performed on each cache node, so that the cache node may prefetch the prefetch data based on the recommendation. However, because data access requests generated by a same application on a computing node are usually distributed to a plurality of cache nodes, each cache node can obtain only a data access history of some data accessed by a specific application in a recent preset time period, and cannot learn a data access history of full data accessed by the application. The data access history includes identifiers of a plurality of pieces of data that the application requests to access and corresponding access time. The cache node performs the recommendation of the prefetch data only based on an access history of some data of the application processed by the node. Therefore, recommendation accuracy is low, and a prefetching bandwidth and cache resources are wasted.

In another implementation, a specific cache node in the cache cluster is set as a central node configured to perform data prefetching, and the central node collects, from another cache node, a data access history of each application of each computing node, so that the recommendation of the prefetch data can be performed based on a complete data access history of a single application. The another cache node may send a prefetch recommendation request to the central node, to receive a prefetch recommendation result from the central node, and prefetch data based on the prefetch recommendation result. However, this data prefetching manner increases additional network communication, increases communication costs, and may cause untimely prefetching.

In this embodiment of this application, each computing node performs prefetch data recommendation. The computing node may perform prefetch data recommendation by using the prefetch recommendation model based on a data access history of a single application in the computing node in a recent preset time period, so that recommendation accuracy is high, no additional network communication is required, and latency of prefetch recommendation is low.

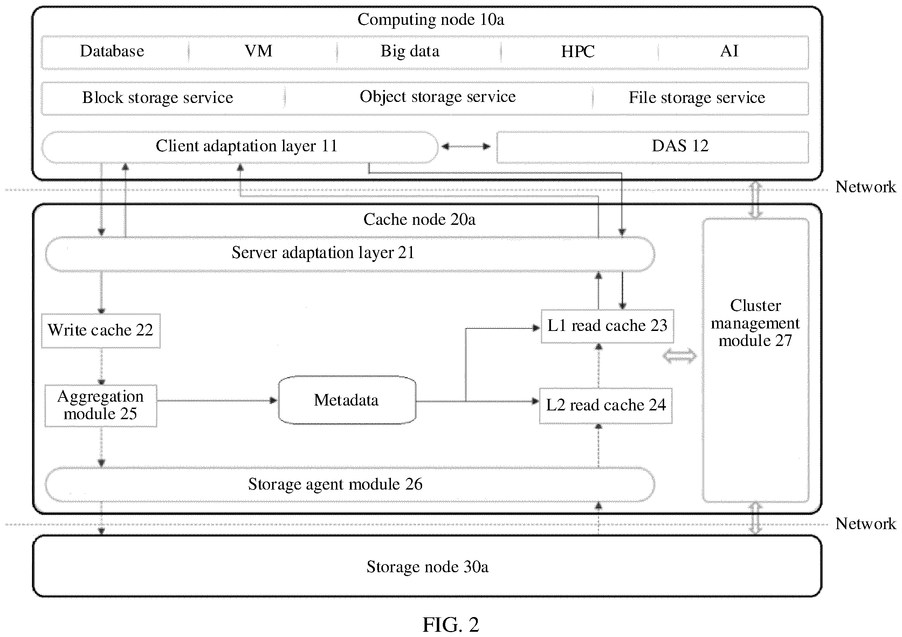

FIG. 2 is a schematic diagram of structures of a computing node and a cache node according to an embodiment of this application. FIG. 2 shows a computing node 10a, a cache node 20a, and a storage node 30a as an example. As shown in FIG. 2, one or more applications may be installed on the computing node 10a. As shown in FIG. 2, the plurality of applications include, for example, a database, a virtual machine (virtual machine, VM), big data, high performance computing (High Performance Computing, HPC), and artificial intelligence (Artificial Intelligence, AI). These applications may use different data services provided by a storage cluster 300. For example, the storage cluster 300 is a Ceph cluster, and the Ceph cluster is a distributed file system. The Ceph cluster deploys a Librados service component on a computing node, to provide a block storage service, an object storage service, a file storage service, and the like for each application on the computing node.

A client adaptation layer 11 may be deployed on the computing node 10a. The client adaptation layer 11 may be embedded, in a form of a function library, into a Librados service component deployed on the computing node 10a. Therefore, the client adaptation layer 11 may intercept a data access request generated by each application for the storage cluster, determine an identifier of a cache node corresponding to target data of the data access request, generate, based on the data access request and the identifier of the corresponding cache node, an operation request to be sent to the cache node, and send the operation request to the corresponding cache node 20a (that is, a cache server). The operation request includes, for example, information such as an operation type, a destination node, and an original data access request. The cache node 20a performs a corresponding operation based on the operation request, and returns a response message to the client adaptation layer 11. After receiving the response message from the server, the client adaptation layer 11 parses the message, and returns a parsing result to an application in the computing node 10a.

A data analysis service (Data Analysis Service, DAS) module 12 (referred to as a DAS 12 below) is further deployed in the computing node 10a. The DAS 12 is configured to register a message service with the client adaptation layer 11, so that read/write access requests of a user at a plurality of moments may be pulled from the client adaptation layer 11. The DAS 12 includes a prefetch recommendation model. The prefetch recommendation model mines a user access mode based on the read/write access requests of the user at the plurality of moments, performs prefetch data recommendation based on the user access mode, and pushes a recommendation result to the client adaptation layer 11. The client adaptation layer 11 generates a data prefetch request based on the recommendation result, and sends the data prefetch request to a corresponding cache node, so that the cache node performs data prefetching.

A server adaptation layer 21 is deployed in the cache node 20a. The server adaptation layer 21 is configured to receive an operation request from the client adaptation layer 11 through a network. The operation request includes, for example, information such as an operation type and a user original data access request. As described above, because different applications use different data services, the user original data access request may have different formats and semantics. Therefore, the server adaptation layer 21 is further configured to perform unified protocol translation and conversion on the original data access request, to convert the original data access request into a data access request that has a unified format and unified semantics. Then, the server adaptation layer 21 may invoke an operation interface based on the operation type to perform request processing. The operation interface includes, for example, a write interface, a read interface, and a prefetching interface.

As shown in FIG. 2, the cache node 20a includes a write cache 22, an L1 read cache (that is, a level-1 read cache) 23, and an L2 read cache (that is, a level-2 read cache) 24. The write cache 22 includes, for example, RAM storage space in the memory 202 and SSD storage space in the hard disk 203 in FIG. 1. The RAM storage space is for accelerating query and flushing, and the SSD storage space is for protecting data (that is, dirty data) written into a RAM. For example, written data may be stored in the SSD storage space in a multi-copy form, to ensure high reliability of the dirty data and high availability in a fault scenario.

The L1 read cache mainly uses a small-capacity and high-performance storage medium, for example, the DRAM or the SCM in the memory 202. The L1 read cache, as a unified entry for a read operation, shields existence of the level-2 read cache upwards to avoid management and interaction complexity. The L2 read cache mainly uses a large-capacity storage medium to receive data evicted by the level-1 read cache. The L2 read cache may use a non-volatile storage medium (such as an SCM or an SSD). The large-capacity L2 read cache can avoid delayed prefetching due to scenarios such as limited space of the L1 read cache or performance fluctuation and deterioration caused by a large amount of hotspot data evicted to the L2 read cache. A global cache in the present invention supports expansion of three levels or more levels of cache.

An aggregation module 25 in FIG. 2 is configured to aggregate data of a small data size stored in the write cache 22 into data of a large data size, and then a storage agent module 26 writes the data of the large data size into the storage cluster 300.

The cache node 20a further includes a cluster management module 27. A cache cluster 200 generates a partition view of the cache cluster by using a cluster management module in each cache node. Specifically, a primary node configured to perform cluster management may be disposed in the cache cluster 200, and each cache node that newly goes online in the cache cluster registers with the primary node by using a cluster management module, so that the primary node may obtain information about a cache resource in each cache node. The primary node may map the cache resource in each cache node to each partition (partition) based on a preset algorithm, and generate a partition view. The partition view includes a mapping relationship between each cache node and each partition. In a multi-copy storage scenario, one partition may be mapped to a plurality of cache nodes. After generating the partition view, the primary node may send the partition view to other cache nodes.

The cache resource includes, for example, cache resources such as a write cache, an L1 read cache, and an L2 read cache in each cache node. The client adaptation layer 11 of the computing node 10a may obtain, for example, the partition view of the cache cluster 200 from a cluster management module 27 of any cache node (for example, the cache node 20a). After intercepting the data access request from the application, the client adaptation layer 11 may determine, from the partition view based on a preset rule, a cache node for processing to-be-accessed data. For example, the client adaptation layer may perform hashing on a key (Key) of the to-be-accessed data to obtain a digest, then perform a modulo operation on a partition quantity by using the digest, to determine a partition number corresponding to the data, and then determine, based on at least one cache node corresponding to the partition number in the partition view, the cache node corresponding to the data access request.

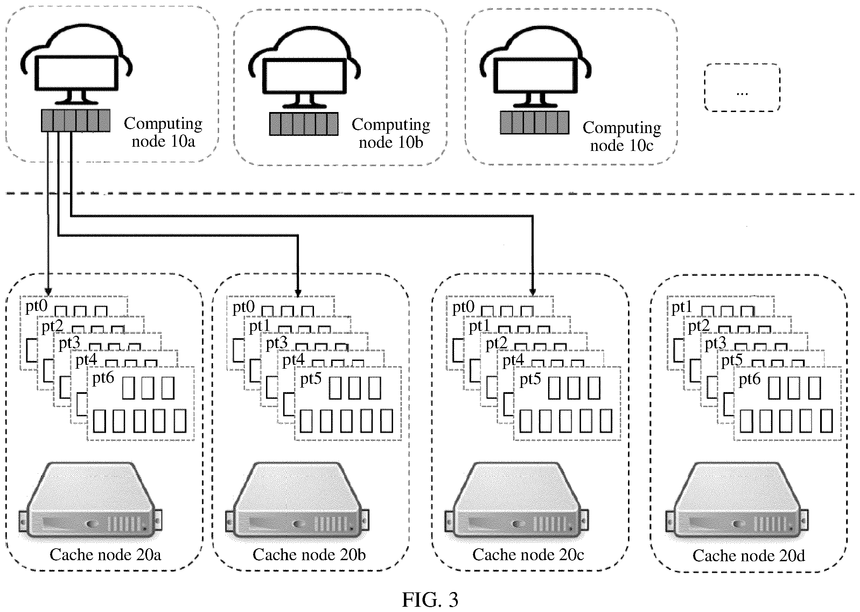

FIG. 3 is a schematic diagram of a method for performing data routing by a client adaptation layer. As shown in FIG. 3, after determining that to-be-accessed data corresponds to a partition pt0, a client adaptation layer 11 may determine, based on a partition view in FIG. 3, that the partition pt0 corresponds to a cache node 20a, a cache node 20b, and a cache node 20c in FIG. 3. Therefore, a data access request may separately be routed to the cache node 20a, the cache node 20b, and the cache node 20c. One partition in FIG. 3 corresponds to three cache nodes, indicating that three copies of data are stored, to improve reliability.

The following describes, with reference to FIG. 2, a procedure of a method of writing data, reading data, and prefetch data according to an embodiment of this specification.

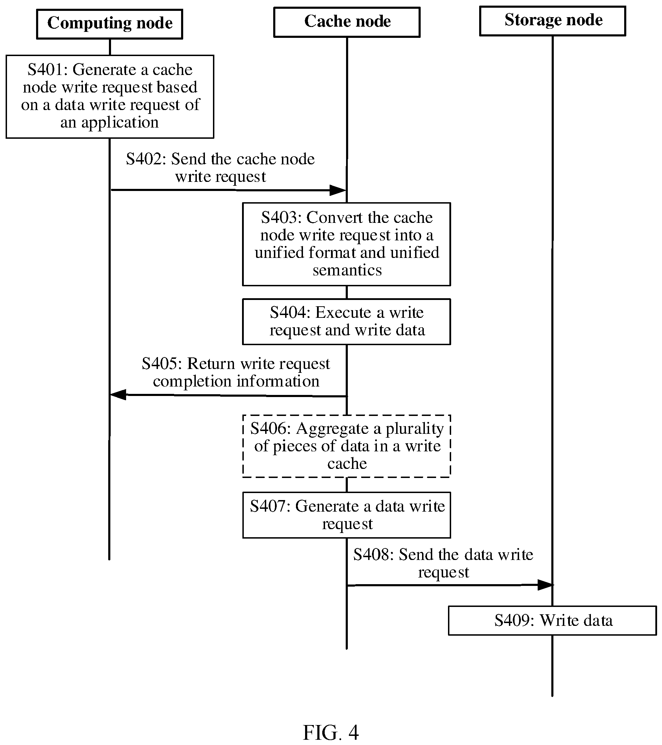

FIG. 4 is a flowchart of a method for writing data into a storage system according to an embodiment of this application. The method shown in FIG. 4 may be performed by a computing node, a cache node, and a storage node in the storage system. The following uses a computing node 10a, a cache node 20a, and a storage node 30a as examples for description.

As shown in FIG. 4, first, in step S401, the computing node 10a generates a cache node write request based on a data write request of an application.

As described above with reference to FIG. 2, one or more applications such as a database application may be installed in the computing node 10a, and a client adaptation layer 11 and a DAS 12 are further installed in the computing node 10a. When the database application expects to write data to a storage cluster, the data write request is generated. The database application may select, based on a requirement, a data storage service provided by the storage cluster, for example, a block storage service, an object storage service, or a file storage service. In a case of a block storage service, the data write request includes, for example, a logical address of data and to-be-written data. The logical address of the data includes, for example, information such as a logical unit number (logical unit number, LUN), a logical block address (logical block address, LBA), and a data length. The logical address of the data is equivalent to a key of the data. In a case of an object storage service, the data write request includes, for example, an object name of data and to-be-written data. The object name of the data is a key of the data. In a case of a file storage service, the data write request includes, for example, a file name of file data and a directory path of the file. The file name and the directory path are equivalent to a key of the data. In other words, when different applications use different data services, formats (for example, a form and a byte length of a key) of keys in data access requests (including a data write request and a data read request) generated by the applications differ greatly. In addition, attributes (such as a field length and field semantics) of fields in data access requests generated when different applications use different data services may also be different. In addition, attributes of fields of data access requests generated by different applications may also be different.

Refer to FIG. 2. After the database application generates the data write request and sends the data write request to a Librados component, the client adaptation layer 11 may intercept the data write request from the Librados component, and generate, based on the data write request, a cache node write request to be sent to the cache cluster 200. Specifically, the client adaptation layer 11 first determines that the to-be-written data, for example, corresponds to the partition pt0. According to a routing process shown in FIG. 3, the client adaptation layer 11 may determine that the to-be-written data should be routed to the cache nodes 20a, 20b, and 20c, so that the client adaptation layer 11 may generate three cache node write requests to be sent to the cache nodes 20a, 20b, and 20c, respectively. The following uses the cache node 20a as an example for description. For operations of the cache node 20b and the cache node 20c, refer to the operations of the cache node 20a.

A generated cache node write request sent to the cache node 20a includes, for example, information such as a node identifier of the cache node 20a, an operation type (a write request type), and an initial data access request.

In step S402, after generating the cache node write request, the computing node 10a sends the cache node write request to a corresponding cache node, for example, the cache node 20a.

Specifically, after generating the cache node write request, the client adaptation layer 11 may send the cache node write request to a server adaptation layer 21 in the cache node 20a.

In step S403, the cache node converts the cache node write request into a unified format and unified semantics.

As described above, because data access requests corresponding to different applications and/or different data storage services have different formats and/or semantics, in this embodiment of this application, the server adaptation layer 21 converts the cache node write request into a unified format and unified semantics. The unified format and unified semantics, for example, correspond to one data storage service in the storage cluster, for example, an object storage service, so that the storage cluster may provide only one data storage service.

Specifically, the conversion operation may include converting a key (for example, a key 1) of to-be-written data in the cache node write request into a preset length. For example, it is assumed that the preset length is 20 bytes. When the data storage service used by the application is a block storage service, a length of a key of data is usually less than or equal to 20 bytes. When the key 1 is less than 20 bytes, the server adaptation layer 21 may adaptively add bytes to the key 1 in a preset manner, to increase a length of the key 1 to obtain a 20-byte key 2. When the data storage service corresponding to the application is an object storage service, a length of the object name may not be fixed, and the server adaptation layer 21 may map the key 1 to a 20-byte key 2 based on, for example, a hash algorithm. The cache node 20a may maintain a table of a correspondence between an initial key and a mapped key by using a data table. After mapping the key 1 to the key 2 by using the hash algorithm, the server adaptation layer 21 may determine, based on the data table, whether a hash collision exists. If a hash collision exists, the server adaptation layer 21 may remap the key 1 to a different 20-byte key based on a preset algorithm, and record the hash collision for query.

As described above, keys of to-be-written data in different cache node write requests are converted into a same preset length, thereby reducing complexity in management of data in the cache cluster, and saving storage space.

The foregoing conversion operation further includes converting semantics of the cache node write request into preset semantics. Specifically, the server adaptation layer 21 converts the cache node write request based on preset attributes such as lengths and semantics of a plurality of fields.

After the foregoing conversion processing, the cache node may process data service requests corresponding to different applications and different data storage services through a unified interface. Therefore, a unified global cache pool may be created for different applications, thereby improving cache resource utilization.

In step S404, the cache node executes a write request and writes data into the cache node.

As described above, when executing the write request, the cache node invokes a write interface to write data in the write request to a write cache 22 in the cache node. The write cache 22 includes, for example, RAM storage space and SSD storage space. After converting the cache node write request into a unified format and unified semantics, the server adaptation layer 21 may invoke a write interface disposed in the cache node 20a. Computer code included in the write interface is executed to perform a series of operations such as data caching and writing data to the storage cluster. After execution of the write interface is started, based on the write interface, data requested to be written in the cache node write request is written in the write cache 22 corresponding to the converted key (for example, a key 3). The data is the data requested to be written in the foregoing data write request.

Specifically, the data is written into SSD space in the write cache 22 in a form of, for example, three copies, to protect the written data. In addition, the data is stored in RAM space in the write cache, to accelerate query and flushing of the data (that is, storage in the storage cluster).

In step S405, after writing the data, the cache node returns write request completion information to the computing node.

After completing writing of the write cache, the cache node 20a may immediately return write request completion information to the computing node 10a, without needing to return write request completion information after data is written to the storage cluster, thereby shortening feedback time, and improving system efficiency.

After writing the data, the cache node 20a may determine whether the write cache satisfies a flushing condition. The flushing condition includes, for example, any one of the following conditions: data stored in the write cache reaches a preset watermark; current time is preset flushing time (for example, idle time of the cache node); and a flushing instruction from service personnel is received. If it is determined that the flushing condition is satisfied, the cache node 20a performs processing such as deduplication and data merging on some data stored in the write cache RAM for a relatively long time, to store the data to the storage cluster.

Optionally, in step S406, the cache node 20a aggregates a plurality of pieces of data in the write cache received from the write cache.

Specifically, an aggregation module 25 in the cache node 20a aggregates a plurality of pieces of data in the write cache received from the write cache.

It is assumed that the plurality of pieces of data to be flushed in the write cache are a plurality of small objects, and the small objects have a small data size, for example, have a size of 8 KB. The plurality of small objects include a plurality of pieces of new data for rewriting old data, and the old data may be distributed at different storage addresses in different storage clusters. Therefore, if the small objects are directly separately written into the storage cluster, separate addressing is needed for the foregoing different storage addresses. As a result, a large quantity of random data writes is to be needed in the storage cluster. Disk seek and disk rotation need to be performed again in the HDD for each random data write in the storage cluster. This causes a reduction in a flushing speed. In addition, a data storage speed of a storage medium in the storage cluster is usually slower than that of a cache medium in the cache cluster. With this regard, in a high concurrency scenario, flushing of data in the write cache to disks cannot keep speed with writing of data into the write cache, so that a capacity of a write cache of the cache node 20a is to be filled up easily. Consequently, application data has to be directly written into back-end storage, and in this case, the write cache cannot provide an acceleration service.

For this problem, in this embodiment of this application, the aggregation module 25 aggregates the plurality of pieces of data in the write cache, and writes aggregated data with a large size into the storage cluster, thereby increasing a speed of writing the data into the storage cluster.

Specifically, the aggregation module 25 may aggregate, for example, 1000 small objects in the write cache into a large object of 8 MB, to sequentially write the large object into the storage cluster. In this way, a plurality of random write operations on the HDD can be converted into one sequential write operation, to be specific, only once disk seek and rotation is needed, instead of 1000 disk seeks and rotations, so that latency is low, thereby increasing a data write speed of the storage cluster.

After aggregating the plurality of small objects into one large object, the aggregation module 25 generates a unique key of the large object, and records information about the large object in metadata in FIG. 2. The information includes keys of the plurality of small objects included in the large object, and an offset address (offset) and a data length (length) of each small object stored in the large object. The aggregation module 25 may store the metadata in the memory, store the metadata in a non-volatile medium (for example, an SSD) in a multi-copy form, and synchronously update the metadata in the SSD each time after the metadata is updated in the memory.

After aggregating the plurality of small objects into the large object, the aggregation module 25 may provide the large object to the storage agent module 26, to write the large object into the storage cluster.

In step S407, the cache node 20a generates a data write request.

Specifically, after obtaining the 8 MB large object, a storage agent module 26 in the cache node 20a determines a storage node (for example, the storage node 30a) corresponding to the data based on a preset data allocation rule, and generates a write request for the large object based on the storage node. Specifically, the write request includes, for example, an identifier of the storage node 30a, a key of the large object, and the large object.

If small objects are not aggregated, the cache node 20a may provide each small object to the storage agent module 26, and the storage agent module 26 may similarly generate a data write request for each small object.

In step S408, the cache node 20a sends the generated data write request to the storage node 30a.

Specifically, the storage agent module 26 sends the generated data write request to the storage node 30a.

In step S409, after receiving the data write request, the storage node 30a writes corresponding data.

Specifically, after receiving the write request, the storage node 30a invokes a write interface to write data. The storage agent module 26 generates a data write request in a unified format. For example, the data write request has semantics and a format of an object storage service. Therefore, only a write interface corresponding to the object storage service needs to be disposed at the storage node 30a. It may be understood that the storage agent module 26 is not limited to generating a write request having semantics and a format of an object storage service, but may generate a write request having semantics and a format of another data storage service.

After completing writing the data, the storage node 30a may return write success information to the cache node 20a. After receiving the write success information, the cache node 20a may update, based on the latest version of each written small object, an old version of each small object stored in an L1 read cache 23 and/or an L2 read cache 24, so that data stored in the read cache is the latest version. In addition, the cache node 20a may delete flushed data stored in the write cache.

After the aggregation module 25 aggregates the small objects as described above, when most small objects in a flushed large object become invalid data due to deletion or modification, the large object stored in the storage cluster occupies much invalid space. Therefore, the aggregation module 25 may reclaim the large object with much invalid space in the idle time. Specifically, the aggregation module 25 may request, by using the storage agent module 26, the storage cluster to read a small object that is still valid in the large object, and after the reading is completed, send a request for deleting the large object to the storage cluster, to complete reclaiming of the large object. The small object that is still valid in the reclaimed large object may be aggregated to a new large object again and then written into the storage cluster. Specifically, the plurality of large objects may be reclaimed in descending order of invalid space in the large objects. After reclaiming the large object, the aggregation module 25 modifies the metadata accordingly.

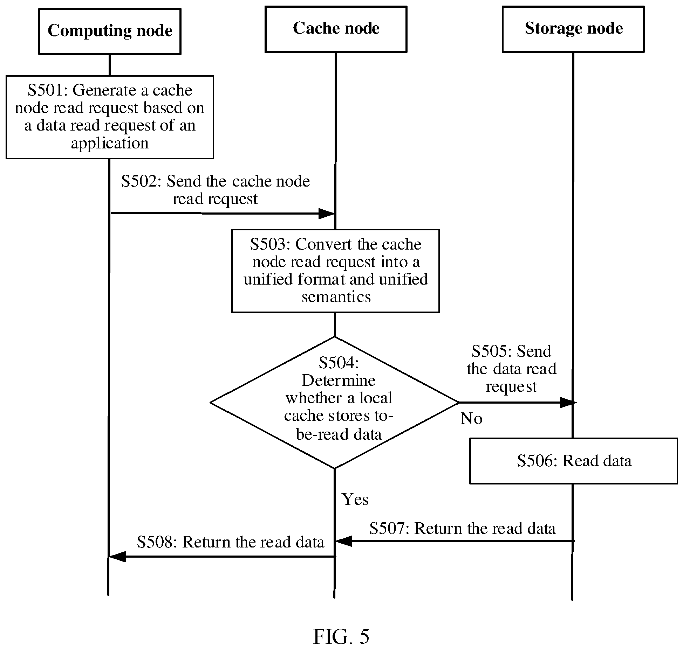

FIG. 5 is a flowchart of a method for reading data in a storage system according to an embodiment of this application. The method shown in FIG. 5 may be performed by a computing node, a cache node, and a storage node in the storage system. The following uses a computing node 10a, a cache node 20a, and a storage node 30a as examples for description.

As shown in FIG. 5, first, in step S501, the computing node 10a generates a cache node read request based on a data read request of an application.

Refer to the description of step S401. When a database application in the computing node 10a expects to read data (for example, an object whose object name is key 1) from a storage cluster, a data read request is generated. The data read request includes a name "key 1" of a to-be-read object. Similarly, the data read request has a format and semantics corresponding to the database application and a data storage service used by the application.

After the computing node 10a generates the data read request, a client adaptation layer 11 intercepts the data read request, and generates, based on the data read request, a cache node read request to be sent to a cache cluster 200. Specifically, the client adaptation layer 11 may similarly determine that to-be-read data should be routed to cache nodes 20a, 20b, and 20c, so that the client adaptation layer 11 may generate three cache node read requests respectively sent to the cache nodes 20a, 20b, and 20c. The following uses the cache node 20a as an example for description.

A generated cache node read request sent to the cache node 20a includes, for example, information such as a node identifier of the cache node 20a, an operation type (a read request type), and an initial data read request.

In step S502, the computing node 10a sends a cache node read request to the cache node 20a.

Specifically, after generating the cache node read request, the client adaptation layer 11 may send the cache node read request to a server adaptation layer 21 in the cache node 20a.

In step S503, the cache node 20a converts the cache node read request into a unified format and unified semantics.

For this step, refer to the foregoing descriptions of step S403. Details are not described herein again. After conversion, the cache node read request is converted for reading an object key 2.

In step S504, the cache node 20a determines whether a local cache stores to-be-read data.

Specifically, the cache node 20a invokes a read interface to determine whether the local cache stores the to-be-read data.

If it is determined that the local cache stores the to-be-read data, the cache node 20a may read data from the local cache, and perform step S508, that is, return the read data to the computing node 10a.

Specifically, after executing the read interface, the cache node 20a first determines whether RAM storage space of a write cache 22 stores a value of the object key 2, and if it is determined that the value of the object key 2 is stored, the cache node 20a may read the value and return the value to the computing node 10a. If the write cache 22 does not store the value of the object key 2, the cache node 20a may determine whether an L1 read cache 23 stores the value of the object key 2. If it is determined that the L1 read cache 23 stores the value of the object key 2, the cache node 20a may read the value and return the value to the computing node 10a. If the L1 read cache 23 does not store the value of the object key 2, the cache node 20a may determine whether an L2 read cache 24 stores the value of the object key 2. If it is determined that the L2 read cache 24 stores the value of the object key 2, the cache node 20a may read the value and return the value to the computing node 10a.

In step S505, the cache node 20a generates a data read request if it is determined that the local cache does not store the to-be-read data, and sends the data read request to the storage node 30a.

In an implementation, the cache node 20a may generate a data read request for reading the object key 2.

In another implementation, in the foregoing scenario in which small objects are aggregated into a large object, the cache node 20a first reads metadata, determines that the object key 2 corresponds to a large object key 3, determines an offset address and a length of the read key 2 in the object key 3, and then generates a data read request. The data read request includes a name "key 3" of a to-be-read object and an offset address and a length of to-be-read data in the object key 3.

In step S506, the storage node 30a reads data.

After receiving the data read request from the cache node 20a, the storage node 30a reads data corresponding to the offset address and the length in the object key 3, to read the object key 2.

In step S507, the storage node 30a returns the read data to the cache node 20a.

In step S508, the cache node 20a returns the read data to the computing node 10a.

Specifically, the cache node 20a converts the key 2 into the key 1 by using the server adaptation layer 21, and returns the value of the key 2 received from the storage node 30a as a value of the key 1 to the computing node 10a, so that the computing node 10a returns the value of the key 1 to the application.

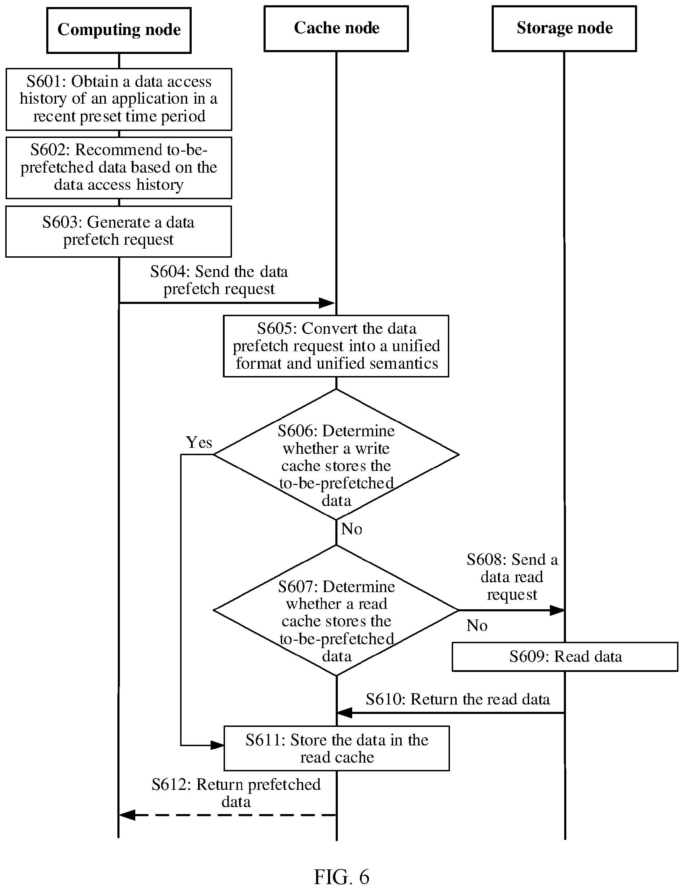

FIG. 6 is a flowchart of a method for prefetching data in a storage system according to an embodiment of this application. The method shown in FIG. 6 may be performed by a computing node, a cache node, and a storage node in the storage system. The following uses a computing node 10a, a cache node 20a, and a storage node 30a as examples for description.

As shown in FIG. 6, first, in step S601, the computing node 10a obtains a data access history of an application in a recent preset time period.

Specifically, a DAS 12 in the computing node 10a obtains the data access history of the application in the recent preset time period.

As described above, the DAS 12 may pull a read/write access request of the application from a client adaptation layer 11, to obtain a data access history of a user of the application in the recent preset time period. The data access history includes, for example, an identifier of data that is read or written by the user in the recent preset time period, and information about a moment at which the data is read or written.

In step S602, the computing node 10a recommends to-be-prefetched data based on a data access history of each application.

Specifically, in this embodiment of this application, the DAS 12 in the computing node recommends the to-be-prefetched data by using a prefetch recommendation model. The prefetch recommendation model may use a plurality of algorithms. For example, the prefetch recommendation model may include a clustering model, configured to perform multi-dimensional feature clustering on data in the data access history of the user, to perform data prefetch recommendation based on a clustering result. The prefetch recommendation model may further include a time series prediction model, configured to predict data accessed by the user at a next moment, to perform data prefetch recommendation based on a prediction result. The prefetch recommendation model may further include algorithms such as frequent pattern mining and hotspot data identification.

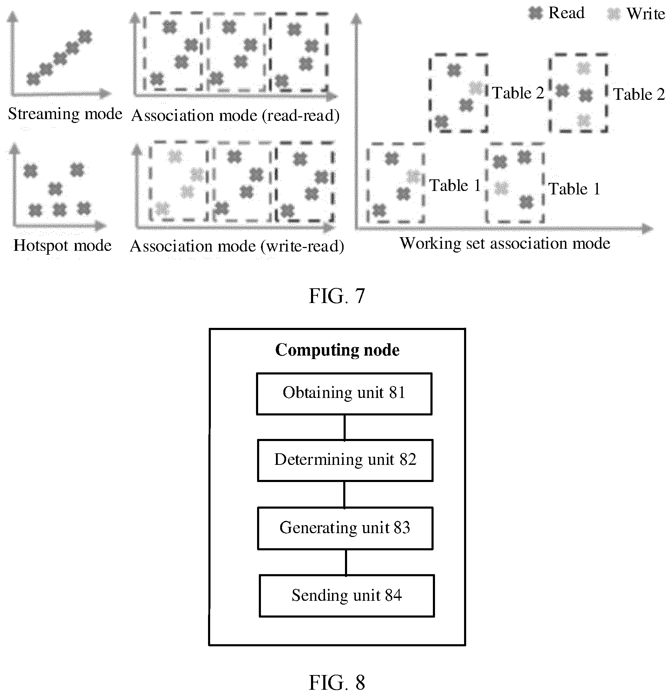

The prefetch recommendation model may determine a user access mode based on a plurality of algorithms. The mode includes, for example, a streaming mode, a hotspot mode, an association mode, and a working set association mode. FIG. 7 is a schematic diagram of various user access modes. In each coordinate axis in FIG. 7, a horizontal axis, for example, represents time, and a vertical axis, for example, represents an identifier of data (that is, a key of data).

As shown in FIG. 7, in a streaming mode, data accessed by a user is in a linear relationship with time, so that the prefetch recommendation model may predict, based on the relationship, data to be accessed by the user at a next moment as recommended prefetch data. Specifically, the prefetch recommendation model outputs an identifier of the recommended prefetch data. In a hotspot mode, hotspot data at different moments may be predicted, so that it may be predicted, based on the mode, that hotspot data at a next moment is used as recommended prefetch data. In an association mode (read-read association or write-read association), data read by a user in a next time period is associated with data read or written in a previous time period. Therefore, it may be predicted, based on the mode, that data to be read by the user at a next moment is used as recommended prefetch data. In a working machine association mode, access of a user to a data table (for example, Table 2) is associated with access of the user to another data table (for example, Table 1). Therefore, it may be predicted, based on the mode, that data to be accessed by the user at a next moment is used as recommended prefetch data.

The DAS 12 supports stateless deployment, and pattern mining may be performed again after the computing node 10a is faulty or the process is restarted. Alternatively, DAS 12 may write an access mode mined by a prefetch recommendation model into a persistent medium, and a user access mode is read from the persistent medium after an event such as a failure, restart, or upgrade, to implement quick preheating.

After predicting the identifier (for example, key 1) of the recommended prefetch data, the prefetch recommendation model provides the identifier of the recommended prefetch data to a client adaptation layer 11.

The prefetch recommendation model is merely an implementation of embodiments of this application, and another manner in which the prefetch data may be recommended is also included in the scope disclosed in embodiments of this application.

At step S603, the computing node 10a generates a data prefetch request based on the recommended prefetch data.

Similar to generating a cache node read request, the client adaptation layer 11 of the computing node 10a determines a corresponding cache node (for example, a cache node key 2) based on an identifier key 1 of the recommended prefetch data, to generate a data prefetch request. The data prefetch request includes an operation request type (a prefetching type), an identifier of the cache node 20a, and an identifier (key 2) of to-be-prefetched data.

In step S604, the computing node sends the data prefetch request to the cache node 20a.

Specifically, the client adaptation layer 11 sends the data prefetch request to the server adaptation layer 21 in the cache node 20a.

In step S605, the cache node 20a converts the data prefetch request into a unified format and unified semantics.

For this step, refer to the foregoing descriptions of step S403. Details are not described herein again. After conversion, the data prefetch request is for prefetching the value of the object key 2.

In step S606, the cache node 20a determines whether the write cache stores the to-be-prefetched data.

Specifically, the cache node 20a first invokes the prefetching interface, and after executing the prefetching interface, the cache node 20a first determines whether the RAM storage space of the write cache 22 stores the value of the object key 2. If it is determined that the write cache 22 stores the to-be-prefetched data, the cache node 20a may read the data from the write cache, and perform step S611, that is, store the data in the L1 read cache or the L2 read cache, and end this prefetching operation.

In step S607, if it is determined that the write cache does not store the to-be-prefetched data, the cache node 20a may determine whether the read cache stores the to-be-prefetched data.

If it is determined that each read cache stores the to-be-prefetched data, the cache node 20a may end this prefetching operation. Alternatively, optionally, the cache node 20a may read the data from the read cache, and perform step S612, that is, return the data to the computing node 10a.

Specifically, when the write cache 22 does not store the value of the object key 2, the cache node 20a may determine whether an L1 read cache 23 stores the value of the object key 2, and if the L1 read cache 23 stores the value of the object key 2, the cache node 20a may end this prefetching operation. When the L1 read cache 23 does not store the value of the object key 2, the cache node 20a may determine whether an L2 read cache 24 stores the value of the object key 2, and if the L2 read cache 24 stores the value of the object key 2, the cache node 20a may end this prefetching operation.

In step S608, the cache node 20a generates a data read request if it is determined that the read cache does not store the to-be-prefetched data, and sends the data read request to a storage node 30a. In step S609, the storage node 30a reads data based on the data read request. In step S610, the storage node 30a returns the read data to the cache node 20a. For steps S608 to S610, refer to the foregoing descriptions of steps S505 to S507. Details are not described herein again.

In step S611, the cache node 20a stores, in the read cache, the data returned by the storage node 30a.

The cache node 20a may store returned object key 2 in the L1 read cache or the L2 read cache, and end this prefetching operation. When the computing node 10a sends a read request for the object key 1, the cache node 20a determines, by converting the read request, that the key 1 corresponds to the key 2, so that the cache node 20a can read the value of the variable key 2 from the read cache, and return the value of the key 2 to the computing node 10a as the value of the key 1, without reading the value from the storage cluster, thereby shortening user access latency.

Optionally, after storing the value of the object key in the read cache, the cache node 20a may perform step S612, that is, return the prefetch data to the computing node.

FIG. 8 is a structural diagram of a computing node according to an embodiment of this application. The computing node is configured to perform the method shown in FIG. 4, FIG. 5, or FIG. 6. The computing node includes:
an obtaining unit 81, configured to obtain information about accessing a storage node by a first application in a preset time period;
a determining unit 82, configured to determine information about prefetch data based on the access information;
a generating unit 83, configured to determine, based on the information about the prefetch data, a cache node prefetching the prefetch data, and generate a prefetch request for prefetching the prefetch data; and
a sending unit 84, configured to send the prefetch request to the cache node.

In an implementation, the determining unit 82 is specifically configured to determine the information about the prefetch data based on the access information by using a prefetch recommendation model.

In an implementation, the access information includes access information of a first user, and the determining unit 82 is specifically configured to: determine an access mode of the first user based on the access information of the first user, and determine to-be-prefetched data based on the access mode by using the prefetch recommendation model.

It should be understood that terms such as "first" and "second" in this specification is used to achieve simplicity in distinguishing similar concepts, and do not constitute any limitation.

A person skilled in the art may clearly understand that descriptions of embodiments provided in this application may be mutually referenced. For ease and brevity of description, for example, for functions of the apparatuses and devices and performed steps that are provided in embodiments of this application, refer to related descriptions in method embodiments of this application. Reference can also be made between various method embodiments and between various apparatus embodiments.

A person skilled in the art may understand that all or some of the steps of the method embodiments may be implemented by a program instructing related hardware. The foregoing program may be stored in a computer-readable storage medium. When the program is run, all or some of the steps of the method embodiments are performed. The storage medium includes: any medium that can store program code, such as a read-only memory (read-only memory, ROM), a random access memory (random access memory, RAM), a magnetic disk, or an optical disc.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium (for example, a solid-state drive (Solid-State Drive, SSD)), or the like.

In the several embodiments provided in this application, it should be understood that the disclosed apparatus and method may be implemented in another manner. For example, the described embodiments are merely examples. For example, division into the modules or units is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, to be specific, may be located in one position, or may be distributed on a plurality of network units. Some or all the modules may be selected based on actual needs to achieve the objectives of the solutions of embodiments. A person of ordinary skill in the art may understand and implement embodiments without creative efforts.

In addition, the apparatus and method described herein, and schematic diagrams of different embodiments can be combined or integrated with other systems, modules, technologies, or methods without departing from the scope of this application. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data prefetching method, wherein the method comprises:
obtaining, by a computing node, information about accessing a storage node by a first application in a preset time period;
determining, by the computing node, information about prefetch data based on the access information;
determining, by the computing node based on the information about the prefetch data, a cache node prefetching the prefetch data, and generating a prefetch request for prefetching the prefetch data;
sending, by the computing node, the prefetch request to the cache node; and
performing, by the cache node, a prefetching operation on the prefetch data in response to the prefetch request.

2. The method according to claim 1, wherein the determining, by the computing node, information about prefetch data based on the access information comprises:
determining, by the computing node, the information about the prefetch data based on the access information by using a prefetch recommendation model.

3. The method according to claim 2, wherein the prefetch recommendation model is based on at least one of the following algorithms: a clustering algorithm, a time series prediction algorithm, a frequent pattern mining algorithm, and a hotspot data identification algorithm.

4. The method according to claim 2 or 3, wherein the access information comprises access information of a first user, and the determining, by the computing node, the information about the prefetch data based on the access information by using a prefetch recommendation model comprises: determining an access mode of the first user based on the access information of the first user by using the prefetch recommendation model, and determining to-be-prefetched data based on the access mode.

5. The method according to any one of claims 1 to 4, wherein the prefetch request is a prefetch request for a data block, file data, or object data, and the method further comprises: after receiving the prefetch request for the prefetch data from the computing node, converting, by the cache node, the prefetch request into a format and semantics that are uniformly set for the data block, the file data, and the object data.

6. The method according to claim 5, wherein the information about the prefetch data comprises a first identifier of the prefetch data, and the converting the prefetch request into a format and semantics that are uniformly set for the data block, the file data, and the object data comprises: converting the first identifier in the prefetch request into a second identifier that conforms to a preset format.

7. The method according to claim 6, wherein the converting the first identifier in the prefetch request into a second identifier that conforms a preset format comprises: converting the first identifier into the second identifier by using a hash algorithm.

8. The method according to claim 6 or 7, wherein the cache node comprises a write cache and a read cache, and the performing, by the cache node, a prefetching operation on the prefetch data in response to the prefetch request comprises:
determining, by the cache node based on the second identifier, whether the write cache stores the prefetch data, and if it is determined that the write cache stores the prefetch data, storing the prefetch data and the second identifier in the read cache correspondingly.

9. The method according to claim 8, wherein the performing, by the cache node, a prefetching operation on the prefetch data in response to the prefetch request further comprises:
if it is determined that the write cache does not store the prefetch data, determining, by the cache node based on the second identifier, whether the read cache stores the prefetch data; and if it is determined that the read cache does not store the prefetch data, generating a data read request based on the second identifier, and sending the data read request to the storage node;
reading, by the storage node, the prefetch data based on the data read request, and returning the prefetch data to the cache node; and
storing, by the cache node, the prefetch data and the second identifier in the read cache correspondingly.

10. A storage system, comprising a computing node, a cache node, and a storage node, wherein
the computing node is configured to: obtain information about accessing a storage node by a first application in a preset time period; determine information about prefetch data based on the access information; determine, based on the information about the prefetch data, a cache node prefetching the prefetch data, and generate a prefetch request for prefetching the prefetch data; and send the prefetch request to the cache node; and
the cache node is configured to perform a prefetching operation on the prefetch data in response to the prefetch request.

11. The storage system according to claim 10, wherein that the computing node is configured to determine information about prefetch data based on the access information specifically comprises:
the computing node is configured to determine the information about the prefetch data based on the access information by using a prefetch recommendation model.

12. The storage system according to claim 11, wherein the prefetch recommendation model is based on at least one of the following algorithms: a clustering algorithm, a time series prediction algorithm, a frequent pattern mining algorithm, and a hotspot data identification algorithm.

13. The storage system according to claim 11 or 12, wherein the access information comprises access information of a first user, and that the computing node is configured to determine the information about the prefetch data based on the access information by using a prefetch recommendation model comprises: the computing node is configured to determine an access mode of the first user based on the access information of the first user, and determine to-be-prefetched data based on the access mode by using the prefetch recommendation model.

14. The storage system according to any one of claims 10 to 13, wherein the prefetch request is a prefetch request for a data block, file data, or object data, and the cache node is further configured to: after receiving the prefetch request for the prefetch data from the computing node, convert the prefetch request into a format and semantics that are uniformly set for the data block, the file data, and the object data.

15. The storage system according to claim 14, wherein the information about the prefetch data comprises a first identifier of the prefetch data, and that the cache node is configured to convert the prefetch request into a format and semantics that are uniformly set for the data block, the file data, and the object data comprises: the cache node is configured to convert the first identifier in the prefetch request into a second identifier that conforms to a preset format.

16. The storage system according to claim 15, wherein that the cache node is configured to convert the first identifier in the prefetch request into a second identifier that conforms a preset format comprises: the cache node is configured to convert the first identifier into the second identifier by using a hash algorithm.

17. The storage system according to claim 15 or 16, wherein the cache node comprises a write cache and a read cache, and that the cache node is configured to perform a prefetching operation on the prefetch data in response to the prefetch request comprises:
the cache node is configured to: determine, based on the second identifier, whether the write cache stores the prefetch data, and if it is determined that the write cache stores the prefetch data, store the prefetch data and the second identifier in the read cache correspondingly.

18. The storage system according to claim 17, wherein that the cache node is configured to perform a prefetching operation on the prefetch data in response to the prefetch request further comprises:
the cache node is configured to: if it is determined that the write cache does not store the prefetch data, determine, based on the second identifier, whether the read cache stores the prefetch data; and if it is determined that the read cache does not store the prefetch data, generate a data read request based on the second identifier, and send the data read request to the storage node;
the storage node is further configured to read the prefetch data based on the data read request, and return the prefetch data to the cache node; and
the cache node is further configured to store the prefetch data and the second identifier in the read cache correspondingly.

19. A data prefetching method, wherein the method is performed by a computing node and comprises:
obtaining information about accessing a storage node by a first application in a preset time period;
determining information about prefetch data based on the access information;
determining, based on the information about the prefetch data, a cache node prefetching the prefetch data, and generating a prefetch request for prefetching the prefetch data; and
sending the prefetch request to the cache node.

20. The method according to claim 19, wherein the determining information about prefetch data based on the access information comprises:
determining the information about the prefetch data based on the access information by using a prefetch recommendation model.

21. The method according to claim 20, wherein the prefetch recommendation model is based on at least one of the following algorithms: a clustering algorithm, a time series prediction algorithm, a frequent pattern mining algorithm, and a hotspot data identification algorithm.

22. The method according to claim 20 or 21, wherein the access information comprises access information of a first user, and the determining the information about the prefetch data based on the access information by using a prefetch recommendation model comprises: determining an access mode of the first user based on the access information of the first user by using the prefetch recommendation model, and determining to-be-prefetched data based on the access mode.

23. A computing node, comprising a processor and a memory, wherein the memory stores executable computer program instructions, and the processor executes the executable computer program instructions to implement the method according to any one of claims 19 to 22.

24. A computer-readable storage medium, wherein the computer-readable storage medium stores computer program instructions, and when the computer program instructions are executed by a computer or a processor, the computer or the processor is enabled to perform the method according to any one of claims 19 to 22.
